# EUROPÄISCHE PATENTSCHRIFT

(11) **EP 3 164 581 B1**
(45) Veröffentlichungstag und Bekanntmachung des Hinweises auf die Patenterteilung: **29.08.2018**
(21) Anmeldenummer: 15732263.7
(22) Anmeldetag: 30.06.2015
(51) Int. Cl.: F01N 3/20

(54) **HEIZEINRICHTUNG FÜR EINE VORRICHTUNG ZUR AUFNAHME UND BEREITSTELLUNG VON FLÜSSIGEM REDUKTIONSMITTEL**
HEATING UNIT FOR A DEVICE FOR ACCOMMODATING AND PROVIDING LIQUID REDUCING AGENT
APPAREIL CHAUFFANT POUR UN DISPOSITIF DESTINÉ À ACCUEILLIR ET DÉLIVRER UN AGENT RÉDUCTEUR LIQUIDE

(30) Priorität: 02.07.2014 DE 102014009824; 23.10.2014 DE 102014015714; 09.03.2015 DE 102015002983
(43) Veröffentlichungstag der Anmeldung: 10.05.2017
(73) Patentinhaber: Arte Reverse Engineering Gbr, 98617 Vachdorf (DE)
(72) Erfinder: REINISCH, Alexander, Vachdorf 98617 (DE); LANTZSCH, Heiko, 99817 Eisenach (DE); BUNNEMANN, Martin, 65599 Dornburg/Frickhofen (DE)
(74) Vertreter: Kruspig, Volkmar
(86) Internationale Anmeldenummer: PCT/EP2015/064766
(87) Internationale Veröffentlichungsnummer: WO 2016/001178

(56) Entgegenhaltungen:
- WO-A1-2011/086038
- DE-A1-102009 025 135
- DE-A1-102012 004 727
- US-A1- 2010 220 984

## Beschreibung

Die Erfindung betrifft eine Heizeinrichtung für eine Vorrichtung zur Aufnahme und Bereitstellung von flüssigem Reduktionsmittel, diese bestehend aus einem Tank und einem in den Tankinnenraum hineinreichenden, topfartigen Behältnis, wobei im Behältnis mindestens eine Fördereinheit für das Reduktionsmittel und ein Anschluss zur Abgabe des Reduktionsmittels vorgesehen sind, gemäß Oberbegriff des Anspruchs 1.

Zur Reinigung von Abgasen insbesondere mobiler Verbrennungskraftmaschinen gehören Abgasbehandlungsvorrichtungen zum Stand der Technik, die das Abgas der Verbrennungskraftmaschine unter Zuhilfenahme eines dem Abgas zugeführten Reduktionsmittels behandeln.

Eines dieser Abgasreinigungsverfahren basiert auf einer selektiven katalytischen Reduktion, bei welchem die Abgase der Verbrennungskraftmaschine von Stickoxidverbindungen gereinigt werden. Diesbezüglich wird dem Abgas ein die Stickoxidverbindungen reduzierendes Medium zugeführt. Als reduzierendes Medium kommt beispielsweise Ammoniak zum Einsatz. Bei der praktischen Anwendung eines solchen Reduktionsverfahrens muss im Kraftfahrzeug ein Bevorratungsbehältnis für das Reduktionsmittel vorhanden sein und darüber hinaus für einen Transport des Reduktionsmittels zu einem sogenannten Injektor Sorge getragen werden. Als Reduktionsmittel kommt beim derzeitigen Stand der Technik eine Harnstoff-Wasser-Lösung zum Einsatz, die unter dem Handelsnamen AdBlue verfügbar ist.

Die DE 10 2010 010 528 A1 offenbart eine Vorrichtung zur Bereitstellung eines derartigen flüssigen Reduktionsmittels, umfassend einen Reduktionsmitteltank zur Bevorratung des Reduktionsmittels, wobei der Tank mindestens eine Heizung aufweist und diese Heizung beweglich im Reduktionsmitteltank angeordnet und als sogenannte aktive Heizung ausgeführt wird. Mit Hilfe der Beheizung ist sichergestellt, dass die vorerwähnte Harnstoff-Wasser-Lösung bei niedrigen Temperaturen nicht einfriert bzw. im eingefrorenen Zustand aufgetaut werden kann.

Bei dem Reduktionsmitteltank mit Temperatursensor nach DE 10 2010 047 277 A1 ist im Tank selbst ein Einsatz befindlich. Am Einsatz ist ein Temperatursensor vorhanden, um die Temperatur des Reduktionsmittels durch einen metallischen Wandabschnitt hindurch zu ermitteln. Auf der Basis der ermittelten Temperatur erfolgt dann eine Steuerung einer entsprechenden Heizeinrichtung, um das bereits erwähnte Einfrieren des Reduktionsmittels zu verhindern.

Bei dem Behältersystem nach DE 10 2004 046 224 B4 ist im Behälter ein Pumpwerk integriert, wobei das Pumpwerk durch ein Spundloch in den Behälter einführbar ist und diesbezüglich noch eine Pumpenlanze mit dem Pumpwerk in Verbindung steht. Der Pumpenkopf ist vom Pumpwerk trennbar und mit einem integrierten Antriebsmotor versehen, wobei das vom Pumpenkopf abgetrennte Pumpwerk derart in das Spundloch des Behälters eingeführt ist, dass der Behälter mit dem eingeführten Pumpwerk eine dichtend abgeschlossene Einheit ausbildet. Der Pumpenkopf umfasst darüber hinaus einen Anschlussflansch zum kraft- und formschlüssigen Anschluss des Pumpenkopfes an das Pumpwerk.

Die Tankanordnung nach DE 10 2011 081 489 A1 geht von einem Reduktionsmitteltank aus sowie einer dem Tank zugeordneten Fördereinrichtung, welche sich außerhalb des Tanks befindet. Zwischen der Fördereinrichtung und dem Tank ist eine Fluidverbindung vorhanden. Diese ist als Ansaugleitung ausgebildet und reicht in einen sogenannten Schwapptopf hinein, wobei letzterer fest im Inneren des Tanks, insbesondere in einer dort vorgesehenen kragenförmigen Ausnehmung fixiert wird.

Bei der DE 10 2010 014 314 A1 ist eine Vorrichtung zur Bereitstellung von flüssigem Reduktionsmittel gezeigt, welche einen Tank mit einem Innenraum und einen zumindest teilweise im Innenraum des Tanks angeordneten Behälter zeigt.

Dieser Behälter weist außenseitig einen Filter auf mit entsprechender Filterfläche und Filtertiefe. Im Behälter befindet sich eine Fördereinheit für das Reduktionsmittel. Die Fördereinheit steht mit einer Abnahmestelle für das Reduktionsmittel in Verbindung. Der Behälter nach DE 10 2010 014 314 A1 kann in die Wandung des Tanks teilweise eingegossen sein, so dass eine fluiddichte Verbindung entsteht. Möglich ist aber auch, dass am Tank ein Flansch angegossen ist, an welchem der Behälter lösbar befestigt wird. Vorzugsweise ist der Behälter in einer Öffnung in einer Tankwand des Tanks befestigt. Der Behälter ist diesbezüglich topfförmig ausgebildet mit einem Topfboden sowie einer zylinderförmigen Topfwand und einer offenen Seite. Dabei ist der Behälter vorzugsweise so in die Tankwand eingesetzt, dass der Behälter die Öffnung in der Tankwand verschließt. Wie bereits dargelegt, nimmt der Behälter die Fördereinheit, ausgebildet als Pumpe, ein Rücklaufventil, einen Sensor und zumindest eine Heizung zur Aufheizung von eingefrorenem Reduktionsmittel auf. Vorzugsweise sind alle aufgezählten Komponenten im Behälter vorhanden.

Die Vorrichtung nach DE 10 2010 014 314 A1 stellt eine große Filterfläche für das Reduktionsmittel zur Verfügung, wobei die Gefahr der Filterverstopfung reduziert ist.

Aus der EP 1 667 400 A1 ist ein Kunststoffbauteil zum Erwärmen eines Fluids vorbekannt, wobei das Kunststoffbauteil zumindest teilweise aus einem elektrisch leitfähigen Polymer besteht.

Weiterhin zeigt die EP 0 250 720 A1 eine Lösung eines Flüssigkeitsfilters für Diesel-Kraftstoffe auf, wobei definierte Wandbereiche des Filtergehäuses als Filterheizung ausgeführt werden. Diesbezüglich sind die Wandungen des Gehäuses ganz oder teilweise aus elektrischem Kunststoff bestehend.

In der EP 1 473 447 B1 ist eine Lösung offenbart, die sich mit der Problematik des Gefrierens einer Harnstofflösung bei tiefen Außentemperaturen auseinandersetzt. Diesbezüglich wird im Behälterboden und/oder in den seitlichen Behälterwänden eine Heizung angeordnet, um ein Durchfrieren der Flüssigkeit im Fahrbetrieb zu verhindern. Die Heizung wird einerseits von der Motorkühlflüssigkeit betrieben, soll aber auch andererseits elektrisch betreibbar sein.

Die EP 2 247 834 B1 bezieht sich ebenfalls auf die Ausbildung eines Harnstoff-Vorratstanks mit Tankwand, wobei die Tankwand einen Schichtaufbau besitzt. Der Schichtaufbau geht von einer ersten, der Tankinnenseite zu weisenden Schutzschicht aus, die mindestens eine Heizschicht trägt. Weiterhin ist mindestens eine zur Tankaußenseite gerichtete Außenschicht vorhanden. Die Heizschicht selbst ist als Flächenheizelement realisiert, insbesondere bestehend aus einem gedruckten Heizelement.

In der US 2010/220984 A1 wird eine weitere Vorrichtung zur Aufnahme und Bereitstellung von flüssigem Reduktionsmittel mit einer Heizeinrichtung offenbart. Die Vorrichtung besteht aus einem Tank und einem in den Tankinnenraum hineinreichenden, topfartigen Behältnis, wobei im Behältnis eine Fördereinheit für das Reduktionsmittel und ein Anschluss zur Abgabe des Reduktionsmittels vorgesehen sind, sowie mit Mitteln zur Befestigung des Behältnisses am oder im Tank. Weiterhin ist ein Moduleinsatz ausgebildet, welcher über einen Trägerkörper verfügt, wobei dieser mindestens die Fördereinheit und den Anschluss zur Abgabe des Reduktionsmittels aufnimmt, und wobei der Moduleinsatz mehrschichtig ausgebildet ist. Eine der Schichten nimmt elektrische Heizelemente auf, bzw. in mindestens eine der Schichten sind elektrische Heizelemente eingebettet. Aus dem Vorgenannten ist es daher Aufgabe der Erfindung, eine weiterentwickelte Heizeinrichtung für eine Vorrichtung zur Aufnahme und Bereitstellung von flüssigem Reduktionsmittel anzugeben, welche in einfacher Weise herstellbar ist und die den speziellen Bedingungen, insbesondere der notwendigen Reagenzienbeständigkeit genügt.

Die Lösung der Aufgabe der Erfindung erfolgt durch die Merkmalskombination nach Anspruch 1, wobei die Unteransprüche mindestens zweckmäßige Ausgestaltungen und Weiterbildungen umfassen.

Es wird demnach von einer Vorrichtung zur Aufnahme und Bereitstellung von flüssigem Reduktionsmittel ausgegangen, welches aus einem Tank und einen in den Tankinnenraum hineinreichenden, topfartigen Behältnis besteht. Im Behältnis befinden sich mindestens eine Fördereinheit für das Reduktionsmittel, gegebenenfalls ein Sensor und ein Anschluss des Reduktionsmittels. Weiterhin sind Mittel zur Befestigung des Behältnisses im oder am Tank ausgebildet.

Weiterhin ist ein Moduleinsatz vorgesehen, welcher über einen Trägerkörper verfügt. Dieser Trägerkörper nimmt bevorzugt lediglich die Fördereinheit und den Sensor sowie gegebenenfalls den Anschluss zur Abgabe des Reduktionsmittels auf und es sind auf oder mittels des Trägerkörpers funktional erforderliche elektrische und/oder hydraulische Verbindungen realisiert derart, dass zu Wartungs- und Servicezwecken der Moduleinsatz in einfacher Weise entnommen werden kann und gegebenenfalls austauschbar ist. Grundsätzlich soll also der Moduleinsatz bzw. der Trägerkörper nur die funktionswesentlichen Komponenten aufnehmen, die üblicherweise einem Verschleiß und einer gewissen Ausfallwahrscheinlichkeit unterliegen. Dies sind im Regelfall die Fördereinheit, d.h. die Reduktionsmittelpumpe und ein Sensor, insbesondere ein Drucksensor zur Überwachung der über die Pumpe variierbaren Druckverhältnisse im Reduktionsmittel-Versorgungssystem, bevorzugt für ein System, welches in einem Kraftfahrzeug Verwendung findet.

Ausgestaltend umfasst der Trägerkörper eine Trägerplatte, welche als elektrischer Verdrahtungsträger ausgebildet ist oder einen solchen Verdrahtungsträger aufnimmt. Zum Einsatz kommen kann hier eine z.B. mehrlagige Leiterplatte oder eine Trägerplatte mit Leadframe-Kontaktierungsmitteln. Der Sensor, der sich auf dem Trägerkörper befindet, ist bevorzugt als Druck- und/oder Temperatursensor oder als entsprechender kombinierter Sensor ausgebildet.

Der Trägerkörper weist darüber hinaus eine zentrale elektrische Anschlusseinheit auf, die z.B. ein Mehrfachkontaktstecker oder eine Mehrfachkontaktbuchse sein kann, welche üblicherweise in Kraftfahrzeugen eingesetzt wird. Denkbar ist hier auch eine sogenannte Fakra-Verbindung.

Der Moduleinsatz ist als ein austauschbares, kartuschenartiges Gebilde ausgeführt, welches z.B. nach Abnahme eines Deckels ohne weiteres und ohne zusätzliche Werkzeuganwendungen zugänglich ist.

Im Raum zwischen dem Behältnis und dem Moduleinsatz kann in an sich bekannter Weise eine Filtereinheit für das Reduktionsmittel angeordnet sein.

Dadurch, dass der Moduleinsatz in einfacher Weise entnommen werden kann, besteht auch ein leichter Zugang zur Filtereinheit, die diesbezüglich ebenfalls leicht austauschbar ist.

Das topfartige Behältnis kann Bestandteil eines Flansches des Tanks sein. Insofern kann das topfartige Behältnis einstückig mit dem Tank bzw. dem Tankkörper ausgebildet werden.

Bevorzugt besteht der Moduleinsatz aus einem Kunststoffmaterial, welches gegen das Reduktionsmittel beständig ist, insbesondere einem HDPE-Material.

In einer bevorzugten Ausführungsform besitzt der Moduleinsatz eine unregelmäßige geometrische Gestalt, die einer diesbezüglichen Aufnahme im Behältnis bzw. eines Flanschabschnitts des Behältnisses komplementär ist, um einen positions- und anschlussgerechten, d.h. lagegerechten Einbau bzw. Austausch zu ermöglichen.

Erfindungsgemäß ist der Moduleinsatz und/oder der Trägerkörper und/oder das Behältnis und/oder mindestens Teile des topfartigen Behältnisses mehrlagig oder mehrschichtig ausgebildet und es nimmt eine der Schichten elektrische Heizelemente auf bzw. sind in mindestens eine der Schichten elektrische Heizelemente eingebettet.

Gemäß einem ersten Aspekt der Erfindung wird zunächst von einem ein- oder zweidimensionalen Kunststoffausgangsmaterial für den Moduleinsatz bzw. den Trägerkörper oder den Tankboden ausgegangen. Auf dieses ein- oder zweidimensionale Kunststoffausgangsmaterial werden die elektrischen Heizelemente form- und/oder stoffschlüssig fixiert. Nach dem Fixieren der Heizelemente erfolgt bei Notwendigkeit eine Umformung des Kunststoffausgangsmaterials zum gewünschten mehrdimensionalen Fertiggebilde.

Während dieses Umformschritts bzw. im Anschluss an den Umformschritt erfolgt ein Umspritzen der Struktur, so dass die gewünschte Reagenzienbeständigkeit geschaffen wird.

Insbesondere um den gewünschten Einbau in Flüssigkeitstanks sicherzustellen, wird der mit dem Heizleitermaterial bestückte Kunststoffträger mit einem PE-Material umspritzt. Wenn das Kunststoffausgangsmaterial ebenfalls aus PE besteht, ergibt sich eine sichere Verbindung zwischen Kunststoffträger und Umspritzung sowie eine Optimierung des gewünschten Wärmeübergangs.

Bei einer Ausführungsform wird der elektrische Heizleiter durch Besticken auf dem Kunststoffträger-Ausgangsmaterial fixiert. Insofern kann als Heizleiter ein mit textiltechnologischem Verfahren hergestelltes und entsprechend verarbeitbares Garn oder ein entsprechender Faden verwendet werden.

Gemäß einem zweiten Aspekt der Erfindung ist das flexible elektrische Heizelement auf dem Moduleinsatz und/oder dem Behältnis und/oder auf dem topfartigen Behältnis aufgebracht, wobei im Anschluss die Gebilde mit aufgebrachten Heizelementen umspritzt werden, um einerseits die gewünschte Reagenzienbeständigkeit zu schaffen sowie um andererseits eine weitere Stabilisierung und innige Verbindung der Heizelemente mit dem Trägermaterial zu bewerkstelligen.

Bei einem dritten Aspekt der Erfindung sind Tankboden und Behältnis einstückig gefertigt und weisen jeweils eine umspritzte Struktur von elektrischen Heizelementen auf. Es sei an dieser Stelle angemerkt, dass das Behältnis auch als Tankflanschmodul ausgebildet sein kann, wobei das Tankflanschmodul dann unmittelbar den Moduleinsatz mit den Funktionsbaugruppen Trägerkörper, Pumpe, Sensor usw. aufnimmt.

Die vorerwähnte Möglichkeit der Ausbildung eines quasi beheizten Tankbodens und/oder beheizter Tankwände findet je nach Größe und Volumen des Tanks und der vorgesehenen Lage im Kraftfahrzeug statt. Wesentlich hierbei ist, dass unter allen Einsatzbedingungen ein Einfrieren der Reduktionsflüssigkeit verhindert wird und ein sicherer Betrieb der diesbezüglichen Abgasreinigungsanlage gewährleistet wird.

Durch eine Segmentierung der Heizelemente in Heizleitergruppen besteht die Möglichkeit, entsprechend der jeweiligen Umgebungstemperaturen und der jeweiligen Einsatzbedingungen die Heizleistung zu steuern bzw. das Zuführen von Wärmeenergie auf bestimmte räumliche Bereiche innerhalb des Tanks zu konzentrieren, um beispielsweise ein schnelles Auftauen der Reduktionsflüssigkeit und eine schnelle Inbetriebnahme der Anlage zu gewährleisten.

Bei einem vierten Aspekt der Erfindung besteht der Moduleinsatz und/oder der Trägerkörper und/oder mindestens Teile des topfartigen Behältnisses aus einem Kunststoffausgangsmaterial, auf welches Heizelemente form- und/oder stoffschlüssig fixiert sind, wobei nach dem Fixieren der Heizelemente ein Umspritzen des Kunststoffausgangsmaterials erfolgt.

Die elektrischen Heizelemente sind bei dieser vierten Ausführungsform so ausgebildet, dass zunächst eine Leiterstruktur oder eine Leiterspinne auf dem Kunststoffausgangsmaterial aufgebracht ist. Das Kunststoffausgangsmaterial kann in diesem Fall ein Vorspritzling sein, wobei die Leiterstruktur oder die Leiterspinne einen Einleger darstellt.

Die Leiterstruktur oder die Leiterspinne wird dann mit einem dotierten, leitfähigen, insbesondere spritzbaren Material bedeckt oder umgeben.

Die mit dem dotierten, leitfähigen Material bedeckte oder umgebene Leiterstruktur oder Leiterspinne weist isolierende, elektrisch trennende Abschnitte auf, welche bevorzugt aus dem Kunststoffausgangsmaterial bestehen. In diesem Fall kann der Moduleinsatz und/oder der Trägerkörper und/oder mindestens Teile des topfartigen Behältnisses aus dem Kunststoffausgangsmaterial als Trennwände ausgebildete Abschnitte besitzen, wobei bei einer Ausführungsform zwischen jeweils zwei Trennwänden die Leiterstruktur hineinreicht und der Raum zwischen den Trennwänden mit dem dotierten, leitfähigen Material gefüllt bzw. ausgespritzt wird. Durch diese Maßnahme entsteht ein kompakter, nicht nur flächiger, sondern quasi dreidimensionaler leistungsfähiger Heizleiter.

Wenn die Heizelemente aus einem spritzfähigen Kaltleitermaterial in Form eines entsprechend dotierten Kunststoffs gefertigt werden, stellt sich der positive Effekt beim Bestromen der Heizelemente eines Kaltleiters dergestalt ein, dass bedingt durch den positiven Temperaturkoeffizienten bei steigender Temperatur sich der Widerstand der Heizelemente erhöht. Dies führt zu einer vorteilhaften Strombegrenzung im Sinne einer Selbstregelung einer entsprechend realisierten Heizung.

Die Erfindung soll nachstehend anhand eines Ausführungsbeispiels sowie unter Zuhilfenahme von Figuren näher beschrieben werden.

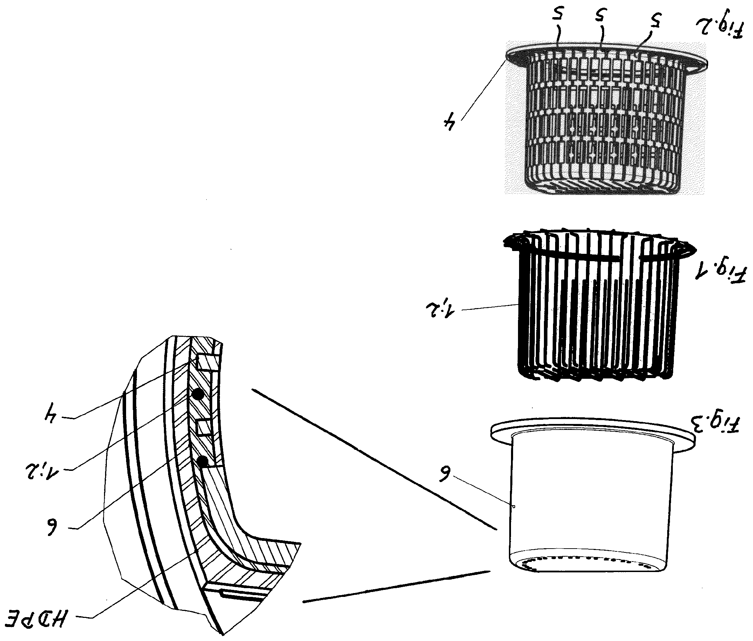

Hierbei zeigen die Fig. 1 bis 3 figürliche Darstellungen einer beispielhaften Realisierung der Heizeinrichtung gemäß dem vierten Aspekt der Erfindung.

Die Fig. 1 illustriert eine Leiterstruktur in Form einer Leiterspinne mit Kontaktdrähten 1 und 2 und einer symbolisierten zentralen Verschaltung der einzelnen Leiterabschnitte.

Die derart ausgebildete Leiterspinne kann als Einleger für den späteren Trägerkörper verwendet werden.

Einen entsprechenden Trägerkörper 4 in hutförmiger Gestalt zeigt die Fig. 2.

Der Trägerkörper 4 besteht aus einem Kunststoffausgangsmaterial und weist Trennabschnitte 5 auf, die der Potentialtrennung bezogen auf den Einleger, d.h. die Kontaktspinne dienen.

Die Fig. 3 zeigt die auf den Trägerkörper 4 aufgelegte Kontaktspinne, wobei im Bereich der vergrößerten Darstellung nach Fig. 3 zwischen den Trennwänden 5, die Leiter 1 und 2 überdeckend, ein dotiertes leitfähiges Kunststoffmaterial 6 aufgebracht ist. Es sind also die Leiter 1; 2 mit dem dotierten Kunststoffmaterial quasi umspritzt, wobei die Abschnitte zwischen den Trennwänden 5 komplett ausfüllbar sind.

Die Dotierung des leitfähigen Materials ist so realisiert, dass ein Kaltleiter, d.h. ein Heizelement mit positivem Temperaturkoeffizienten, gebildet wird.

Die so geschaffene Anordnung kann dann im Sinne einer Komplettierung umspritzt werden, wobei bezüglich dieses Spritzmaterials HDPE bevorzugt zum Einsatz kommt.

## Patentansprüche

1. Vorrichtung zur Aufnahme und Bereitstellung von flüssigem Reduktionsmittel mit einer Heizeinrichtung, die Vorrichtung bestehend aus einem Tank und einem in den Tankinnenraum hineinreichenden, topfartigen Behältnis, wobei im Behältnis mindestens eine Fördereinheit für das Reduktionsmittel und ein Anschluss zur Abgabe des Reduktionsmittels vorgesehen sind, sowie mit Mitteln zur Befestigung des Behältnisses am oder im Tank, wobei ein Moduleinsatz ausgebildet ist, welcher über einen Trägerkörper (4) verfügt und dieser mindestens die Fördereinheit und den Anschluss zur Abgabe des Reduktionsmittels aufnimmt,
der Moduleinsatz und/oder der Trägerkörper (4) und/oder mindestens Teile des topfartigen Behältnisses mehrschichtig ausgebildet sind und eine der Schichten elektrische Heizelemente aufnimmt oder in mindestens eine der Schichten elektrische Heizelemente eingebettet sind,
**dadurch gekennzeichnet, dass**
die elektrischen Heizelemente eine Leiterstruktur oder Leiterspinne (1; 2) umfassen, welche auf einem Kunststoffausgangsmaterial befestigt ist und die Leiterstruktur oder die Leiterspinne (1; 2) mit einem dotierten, leitfähigen Material (6) bedeckt oder umgeben ist, wobei der Moduleinsatz und/oder der Trägerkörper und/oder mindestens Teile des topfartigen Behältnisses aus dem Kunststoffausgangsmaterial besteht, auf welches die Heizelemente form- und/oder stoffschlüssig fixiert sind, wobei nach dem Fixieren der Heizelemente ein Umspritzen des Kunststoffausgangsmaterials erfolgt ist.

2. Vorrichtung nach Anspruch 1,
**dadurch gekennzeichnet, dass**
der Moduleinsatz als austauschbares, kartuschenartiges Gebilde ausgeführt ist.

3. Vorrichtung nach Anspruch 2,
**dadurch gekennzeichnet, dass**
der Moduleinsatz oder das kartuschenartige Gebilde form- und/oder kraftschlüssig im Behältnis fixierbar ist.

4. Vorrichtung nach einem der vorangegangenen Ansprüche,
**dadurch gekennzeichnet, dass**
der Moduleinsatz eine unregelmäßige, geometrische Gestalt besitzt, die einer diesbezüglichen Aufnahme im Behältnis komplementär ist, um einen positions- und anschlussgerechten Einbau bzw. Austausch zu ermöglichen.

5. Vorrichtung nach Anspruch 1,
**dadurch gekennzeichnet, dass**
das dotierte leitfähige Material (6) spritzbar ist.

6. Vorrichtung nach Anspruch 1 oder 5,
**dadurch gekennzeichnet, dass**
die mit dem dotierten, leitfähigen Material (6) bedeckte oder umgebene Leiterstruktur oder Leiterspinne (1; 2) isolierende, elektrisch trennende Abschnitte (5) aufweist, welche bevorzugt aus dem Kunststoffausgangsmaterial bestehen.

7. Vorrichtung nach einem der vorangegangenen Ansprüche,
**dadurch gekennzeichnet, dass**
die Heizelemente als Kaltleiter ausgebildet sind.

## Claims

1. Device for accommodating and providing liquid reducing agents with a heating unit, the heating unit comprising a tank and a pot-like container extending into the tank interior, wherein at least one supply unit for the reducing agent and a connecting port for dispensing the reducing agent is provided in the container, as well as means for fastening the container to or in the tank, wherein a module insert is also formed which has a carrier body (4), the latter accommodating at least the supply unit and the connecting port for dispensing the reducing agent, the module insert and/or the carrier body (4) and/or at least parts of the pot-like container are formed multi-layered and one of the layers accommodates electrical heating elements or electrical heating elements are embedded in at least one of the layers,
**characterized in that**
the electrical heating elements comprise a conductor structure or a conductor spider (1; 2) which is attached to the plastic basic material and the conductor structure or the conductor spider (1; 2) is covered or surrounded by a doped, conductive material (6), wherein the module insert and/or the carrier body and/or at least parts of the pot-like container consist of the plastic basic material, on which the heating elements are fixed in a form-fitting and/or bonded manner, the plastic basic material being molded over following the fixing of the heating elements.

2. Device according to Claim 1,
**characterized in that**
the module insert is designed as a replaceable, cartridge-like structure.

3. Device according to Claim 2,
**characterized in that**
the module insert or the cartridge-like structure can be fixed in the container in a form-fitting or firmly bonded manner.

4. Device according to one of the preceding claims,
**characterized in that** the module insert has an irregular, geometric shape which is complementary to a respective receptacle in the container in order to enable a position and connection compliant installation or replacement

5. Device according to Claim 1,
**characterized in that** the doped, conductive material (6) is injectable.

6. Device according to Claim 1 or 5,
**characterized in that** the conductor structure or conductor spider (1; 2) which is covered or surrounded by the doped, conductive material (6) comprises insulating, electric disconnecting sections, which preferably consist of the plastic basic material.

7. Device according to one of the preceding claims,
**characterized in that**
the heating elements are formed as PTC resistors.

## Revendications

1. Dispositif pour recevoir et mettre à disposition un agent réducteur liquide, comportant un moyen de chauffage, le dispositif étant constitué par un réservoir et par un récipient en forme de pot pénétrant dans l'intérieur du réservoir, au moins une unité de convoyage pour l'agent réducteur et un raccord pour distribuer l'agent réducteur étant prévus dans le récipient, ainsi que des moyens pour fixer le récipient sur ou dans le réservoir,
dans lequel
un module d'insertion est réalisé qui dispose d'un corps de support (4) et celui-ci reçoit au moins l'unité de convoyage et le raccord de distribution d'agent réducteur,
le module d'insertion et/ou le corps de support (4) et/ou au moins des parties du récipient en forme de pot sont réalisés en plusieurs couches et l'une des couches reçoit des éléments de chauffage électriques, ou des éléments de chauffage électrique sont noyés dans l'une au moins des couches,
**caractérisé en ce que**
les éléments de chauffage électriques comprennent une structure conductrice ou une corbeille conductrice (1 ; 2) qui est fixée sur une matière plastique de départ et la structure conductrice ou la corbeille conductrice (1 ; 2) est recouverte ou entourée par un matériau conducteur dopé (6), le module d'insertion et/ou le corps de support et/ou des parties au moins du récipient en forme de pot étant constitué(s) en la matière plastique de départ sur laquelle les éléments de chauffage sont fixés par coopération de formes et/ou par coopération de matière, et après la fixation des éléments de chauffage il est prévu un surmoulage de la matière plastique de départ.

2. Dispositif selon la revendication 1,
**caractérisé en ce que**
le module d'insertion est un ensemble interchangeable et en forme de cartouche.

3. Dispositif selon la revendication 2,
**caractérisé en ce que**
le module d'insertion ou l'ensemble en forme de cartouche est susceptible d'être fixé par coopération de formes et/ou par coopération de forces dans le récipient.

4. Dispositif selon l'une des revendications précédentes,
**caractérisé en ce que**
le module d'insertion possède une configuration géométrique irrégulière qui est complémentaire d'un logement correspondant dans le récipient pour permettre une intégration ou un échange conforme à la position et au raccord.

5. Dispositif selon la revendication 1,
**caractérisé en ce que**
le matériau conducteur dopé (6) est injectable.

6. Dispositif selon la revendication 1 ou 5,
**caractérisé en ce que**
la structure conductrice ou la corbeille conductrice (1 ; 2) recouverte ou entourée par le matériau conducteur dopé (6) comprend des portions isolantes (5) assurant une séparation électrique qui sont constituées de préférence en la matière plastique de départ.

7. Dispositif selon l'une des revendications précédentes,
**caractérisé en ce que**
les éléments de chauffage sont réalisés sous forme de thermistances à coefficient de température positif.
